# EUROPÄISCHE PATENTSCHRIFT

(11) **EP 3 894 256 B1**
(45) Veröffentlichungstag und Bekanntmachung des Hinweises auf die Patenterteilung: **11.01.2023**
(21) Anmeldenummer: 19813764.8
(22) Anmeldetag: 29.11.2019
(51) Int. Cl.: G06F 3/0488, G06F 3/04842, B60K 37/06

(54) **BEDIENSYSTEM FÜR EIN FAHRZEUG, ENTSPRECHENDES VERFAHREN UND STEUERGERÄT**
OPERATING SYSTEM FOR A VEHICLE, CORRESPONDING METHOD AND CONTROLLER
SYSTÈME DE COMMANDE POUR UN VÉHICULE, PROCÉDÉ ET CONTRÔLEUR CORRESPONDANTS

(30) Priorität: 13.12.2018 DE 102018221706
(43) Veröffentlichungstag der Anmeldung: 20.10.2021
(73) Patentinhaber: VOLKSWAGEN AKTIENGESELLSCHAFT, 38440 Wolfsburg (DE)
(72) Erfinder: HUWER, Wojciech, 38110 Braunschweig (DE)
(86) Internationale Anmeldenummer: PCT/EP2019/083028
(87) Internationale Veröffentlichungsnummer: WO 2020/120164

(56) Entgegenhaltungen:
- DE-A1-102013 210 833
- DE-A1-102015 216 714
- US-A1- 2012 113 009

## Beschreibung

Die Erfindung betrifft ein Bediensystem für ein Fahrzeug gemäß dem Oberbegriff des Patentanspruchs 1, ein Verfahren zum Betrieb eines Bediensystems für ein Fahrzeug gemäß dem Oberbegriff des Patentanspruchs 4, ein Steuergerät gemäß dem Oberbegriff des Patentanspruchs 7 und ein Fahrzeug gemäß dem Oberbegriff des Patentanspruchs 8.

Im Fahrzeugbereich, beispielsweise bei Kraftfahrzeugen, sind unterschiedliche Lösungen bekannt, um Bedienelemente zu realisieren. Dabei kommen auch berührungssensitive Bedienelemente zum Einsatz. Diese werden durch Berührung oder Annäherung eines Bedieners bedient. Solche berührungssensitiven Bedienelemente können auch mit Anzeigefunktionen ausgestattet sein, beispielsweise bei Touchdisplays. In der Regel stellen berührungssensitive Bedienfelder dabei mehrere berührungssensitive Bedienelemente bereit, mit denen unterschiedliche Funktionen beispielsweise des Fahrzeugs bedienbar sind. Funktionen im Bereich Information, Entertainment, Komfort oder auch Lichtfunktionen des Fahrzeugs seien dabei rein exemplarisch genannt.

Bei berührungssensitiven Bedienelementen kann es, insbesondere während der Fahrt, zu einer ungewollten Bedienung eines Bedienelements kommen. Gründe hierfür sind zum einen Erschütterungen und zum anderen die oft räumliche Nähe der Bedienelemente. Möchte der Bediener beispielsweise die Hand bei der Bedienung eines Bedienelements ablegen, kann so ungewollt auch ein anderes Bedienelement betätigt werden.

DE 10 2013 210 833 A1 offenbart eine Betätigungseinrichtung und ein Verfahren zur Auswahl von Schaltstufen eines Fahrzeuggetriebes mit Shift-by-wire-Betätigung. Hierbei ist vorgesehen, dass bei Auswahl eines Berührungsabschnittes auf einem Berührungsbildschirm dieser Berührungsabschnitt zu einem Betätigungsabschnitt überführt werden kann. Während der Überführung werden andere, gegebenenfalls durch den berührten Berührungsabschnitt überstrichene Berührungsabschnitte deaktiviert.

Der Erfindung liegt nun die Aufgabe zugrunde, eine technische Lösung bereitzustellen, mit der eine ungewollte Bedienung einfach und sicher vermieden wird.

Die Aufgabe wird durch die Gegenstände der unabhängigen Patentansprüche 1, 4, 7 und 8 gelöst. Weitere bevorzugte Ausgestaltungen der Erfindung ergeben sich aus den übrigen, in den Unteransprüchen genannten Merkmalen.

Ein erster Aspekt der Erfindung betrifft ein Bediensystem für ein Fahrzeug, umfassend: ein Steuergerät und eine berührungssensitive Bedienoberfläche, wobei das Steuergerät ausgebildet ist, eine Anzeige einer Mehrzahl von Bedienelementen auf der Bedienoberfläche zu steuern, eine Bedieneranwahl auf der Bedienoberfläche im Bereich wenigstens eines angezeigten Bedienelements zu registrieren und dann eine Funktion zu steuern, die dem angewählten Bedienelement zugeordnet ist, wobei das Steuergerät weiterhin ausgebildet ist, für eine Dauer der Bedieneranwahl des angewählten Bedienelements, wenigstens eine Funktion, die wenigstens einem anderen Bedienelement zugeordnet ist, zu sperren.

In erfindungsgemäßer Ausgestaltung des Bediensystems der Erfindung ist vorgesehen, dass die Bedienelemente auf mehreren Bedienoberflächen anzeigbar sind, die unmittelbar nebeneinander angeordnet sind.

"Unmittelbar" ist dabei dahingehend zu verstehen, dass die Bedienelemente aufgrund ihrer räumlichen Nähe der Gefahr einer ungewollten Berührung unterliegen. Dies ist der Fall, wenn unterschiedliche Bedienoberflächen dicht beieinander angeordnet sind. Dies kann beispielsweise in einer Mittelkonsole eines Fahrzeugs der Fall sein, wo Bedienoberflächen weiterhin beispielsweise in Form von Bedienleisten oder Bedienfeldern angeordnet sein können. Vorzugsweise wird zur Ableitung eines benennbaren Abstands der Bedienoberflächen untereinander, ein Abstand gewählt, der im Bereich der Länge einer durchschnittlichen menschlichen Hand oder darunter liegt. Ebenfalls vorzugsweise kann der Abstand bis zu 250 mm betragen oder darunter liegen.

Dies bietet den Vorteil, dass bei Bedienung eines Bedienelements eine ungewollte Berührung oder Annäherung eines anderen Bedienelements nicht dazu führt, dass eine mit dem anderen Bedienelement steuerbare Funktion, beispielsweise Fahrzeugfunktionen, ungewollt ausgelöst wird. Somit werden die Bediensicherheit und der Komfort vorteilhaft erhöht.

Steuergeräte können durch einfache Anpassung ihrer Steuerungssoftware vielfältige Steuerungsaufgaben übernehmen und sind daher besonders flexible sowie schnell und einfach anpassbar. So kann vorteilhaft auch ein konventionelles Steuergerät eines Fahrzeugs softwareseitig angepasst und eingerichtet werden, in dem Bediensystem der Erfindung die Bedienelemente in gegenseitiger Abhängigkeit ihrer Bedienzustände zu steuern. All dies ist mit besonders geringem Aufwand möglich. Sind die Bedienelemente bereits im Fahrzeug vorgesehen, kann sogar komplett auf zusätzliche Hardware verzichtet werden.

Das Steuergerät und die Bedienoberfläche können sowohl ineinander integriert sein oder die Bedienoberfläche kann Peripherie des Steuergeräts darstellen. Die Bedienoberfläche kann auch in mehrere Bedienoberflächen unterteilt sein, die die Peripherie des Steuergeräts bilden. Die Bedienelemente können ihre Signale über ein Bussystem an das Steuergerät senden. Dabei kann es sich beispielsweise um ein LIN- oder CAN-Bussystem handeln.

Die Sperrung der Funktion eines Bedienelements kann beispielsweise dadurch erfolgen, dass ein Pixelbereich um das angewählte Bedienelement definiert wird und alle Eingaben auf der Bedienoberfläche, die außerhalb des Pixelbereichs liegen und somit anderen Bedienelementen zuzuordnen sind, ignoriert werden. Dies ist besonders vorteilhaft, wenn mehrere Bedienelemente auf einer Bedienoberfläche angezeigt werden. Werden unterschiedliche Bedienelemente auf unterschiedliche Bedienoberflächen angezeigt, kann beispielsweise eine Eingabe auf bestimmte Bedienoberflächen insgesamt ignoriert werden.

Von einer Sperrung einer Funktion wird vorliegend allgemein dann gesprochen, wenn eine Berührung oder Annäherung des jeweiligen Bedienelements auf der Bedienoberfläche durch einen Bediener keine Auslösung einer dem Bedienelement zugeordneten Funktion hervorruft. Von einer Sperrung einer Funktion wird auch dann gesprochen, wenn die Sperrung bereits vorliegt und aufgrund einer Bedieneranwahl beibehalten wird. Von einer Anwahl durch den Bediener wird bereits dann gesprochen, wenn dieser sich hinreichend dem Bedienelement annähert, sodass die Bedienoberfläche im Bereich des Bedienelements reagiert.

In bevorzugter Ausgestaltung des Bediensystems der Erfindung ist vorgesehen, dass das Steuergerät ausgebildet ist, im Falle einer Bedieneranwahl des wenigstens einen Bedienelements alle Funktionen, die den anderen Bedienelementen zugeordnet sind, zu sperren.

Die Bediensicherheit des Bediensystems ist so besonders groß. Dies bietet sich insbesondere dann an, wenn alle Bedienelemente derart nah beieinander angezeigt werden, dass die Bedienung eines der Bedienelemente die Gefahr birgt, dass mehrere andere Bedienelemente ungewollt bedient werden.

In weiterhin bevorzugter Ausgestaltung des Bediensystems der Erfindung ist vorgesehen, dass das Steuergerät ausgebildet ist, wenn die Bedieneranwahl des einen Bedienelements endet, die Sperrung der wenigstens einen Funktion, die dem wenigstens einen anderen Bedienelement zugeordnet ist, aufzuheben und dass das Steuergerät weiterhin ausgebildet ist, wenn dann eine Bedieneranwahl eines anderen Bedienelements, dessen Funktion vorher gesperrt war, erfolgt, die Funktion des anderen Bedienelements zu steuern und dass das Steuergerät weiterhin ausgebildet ist, für die Dauer der Bedieneranwahl des anderen Bedienelements wenigstens die Funktion des davor angewählten Bedienelements zu sperren.

Mit anderen Worten kann die Steuerung der Sperrung der Bedienelemente in gegenseitiger Abhängigkeit über das Steuergerät sowohl unidirektional als auch bidirektional erfolgen.

Dies trägt zu einer weiteren Erhöhung der Bediensicherheit bei. Bei gleichzeitiger Anwahl mehrerer Bedienelemente können vorzugsweise die Funktionen aller Bedienelemente gesperrt werden oder auch eine Priorisierung in der Steuerung hinterlegt sein. Da eine exakt gleichzeitige Berührung praktisch kaum möglich ist, wird der Fachmann anhand der hier offenbarten Lehre aber in die Lage versetzt, Zeitabstände zwischen der Berührung mehrerer Bedienelemente festzulegen, die praktisch als gleichzeitig angesehen werden können. Die Priorisierung oder auch die Zeitabstände können ebenfalls in der Steuerung hinterlegt sein.

Ein weiterer Aspekt der Erfindung betrifft ein Verfahren zum Betrieb eines Bediensystems für ein Fahrzeug, wobei das betriebene Bediensystem ein Steuergerät und eine berührungssensitive Bedienoberfläche umfasst und wobei das Verfahren die folgenden Schritte umfasst:
- Steuerung einer Anzeige einer Mehrzahl von Bedienelementen auf der Bedienoberfläche durch das Steuergerät;
- Vornahme einer Bedieneranwahl auf der Bedienoberfläche im Bereich eines angezeigten Bedienelements:
   - Registrieren der Bedieneranwahl durch das Steuergerät;
   - Steuern einer Funktion, die dem angewählten Bedienelement zugeordnet ist, durch das Steuergerät; und
   - Sperren wenigstens einer Funktion, die wenigstens einem anderen Bedienelement zugeordnet ist, für die Dauer der Bedieneranwahl durch das Steuergerät.

In erfindungsgemäßer Ausgestaltung des Verfahrens der Erfindung ist vorgesehen, dass die Bedienelemente auf mehreren Bedienoberflächen angezeigt werden, die unmittelbar nebeneinander angeordnet sind.

Bei dem in dem Verfahren betriebenen Bediensystem kann es sich insbesondere um ein erfindungsgemäßes Bediensystem gemäß der vorhergehenden Beschreibung handeln. Die in Bezug auf das Bediensystem der Erfindung offenbarte technische Lehre ist somit auf das Verfahren der Erfindung übertragbar sowie umgekehrt.

Vorzugsweise wird das Bediensystem in einem Fahrzeug betrieben.

In bevorzugter Ausgestaltung des Verfahrens der Erfindung ist vorgesehen, dass für die Dauer der Bedieneranwahl des einen Bedienelements alle Funktionen, die anderen Bedienelementen zugeordnet sind, durch das Steuergerät gesperrt werden.

In weiterhin bevorzugter Ausgestaltung des Verfahrens der Erfindung ist vorgesehen, dass die Bedieneranwahl des einen Bedienelements endet und daraufhin die Sperrung der wenigstens einen Funktion, die dem wenigstens einen anderen Bedienelement zugeordnet ist, durch das Steuergerät aufgehoben wird und dann eine Bedieneranwahl eines anderen Bedienelements, dessen Funktion vorher gesperrt war, erfolgt und die Funktion des anderen Bedienelements durch das Steuergerät gesteuert wird und das Steuergerät für die Dauer der Bedieneranwahl des anderen Bedienelements wenigstens die Funktion des davon angewählten Bedienelements sperrt.

Auf diese Weise kann die Steuerung der Sperrung der Funktionen der Bedienelemente in gegenseitiger Abhängigkeit über das Steuergerät auch bidirektional erfolgen, was das Verfahren der Erfindung sehr flexibel und dabei sicher für unterschiedliche Bediensituationen macht.

Ein weiterer Aspekt der Erfindung betrifft ein Steuergerät, ausgebildet zur Durchführung eines erfindungsgemäßen Verfahrens gemäß der vorhergehenden Beschreibung.

Vorzugsweise handelt es sich um ein konventionelles Steuergerät eines Fahrzeugs, das über seine Steuerungssoftware ausgebildet und eingerichtet ist, ein Bediensystem eines Fahrzeugs, vorzugsweise ein erfindungsgemäßes Bediensystem, in der erfindungsgemäßen Weise zu betreiben.

Ein weiterer Aspekt der Erfindung betrifft ein Fahrzeug, umfassend ein erfindungsgemäßes Bediensystem gemäß der vorhergehenden Beschreibung und ein erfindungsgemäßes Steuergerät gemäß der vorhergehenden Beschreibung.

Auch kann das erfindungsgemäße Fahrzeug vorzugsweise in einem erfindungsgemäßen Verfahren gemäß der vorhergehenden Beschreibung verwendet werden. Die in Bezug auf das Bediensystem, das Steuergerät und das Verfahren der Erfindung offenbarte technische Lehre ist somit auf das erfindungsgemäße Fahrzeug übertragbar sowie umgekehrt.

Vorzugsweise kann es sich bei dem Fahrzeug der Erfindung um ein Kraftfahrzeug handeln.

Mit nochmals anderen Worten zusammengefasst betrifft die Erfindung ein System umfassend eine oder mehrere touchsensitive Bedienoberflächen, auf denen nebeneinander angeordnete Bedienelemente angezeigt werden. Durch ein Steuergerät mit einer Steuerungssoftware können die Bedienelemente untereinander über die Steuerungssoftware bestimmen, wann ein jeweiliges Bedienelement aktiv auf Berührungen hören soll oder deaktiviert ist.

Die verschiedenen in dieser Erfindung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen schematischen Ablauf eines erfindungsgemäßen Verfahrens zum Betrieb eines erfindungsgemäßen Bediensystems anhand von Anwahlsignalen in einer Ausführungsform; und
- Figur 2: ein erfindungsgemäßes Fahrzeug in einer Ausführungsform.

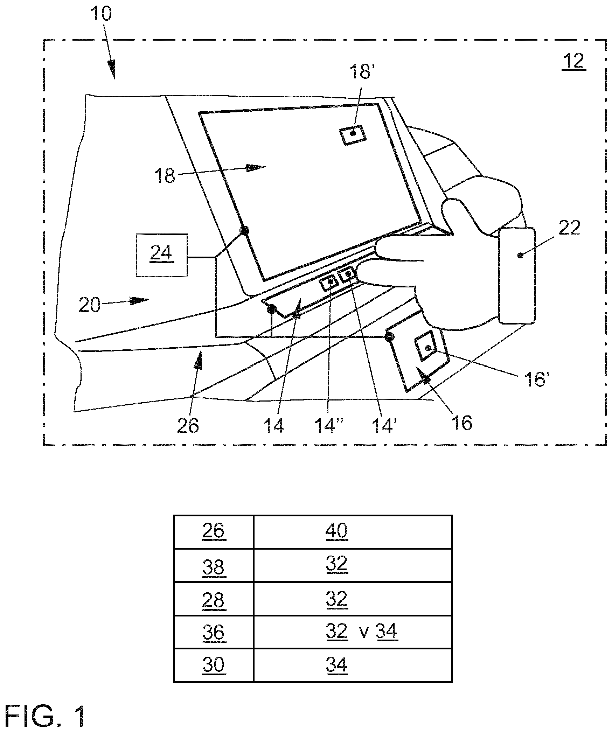

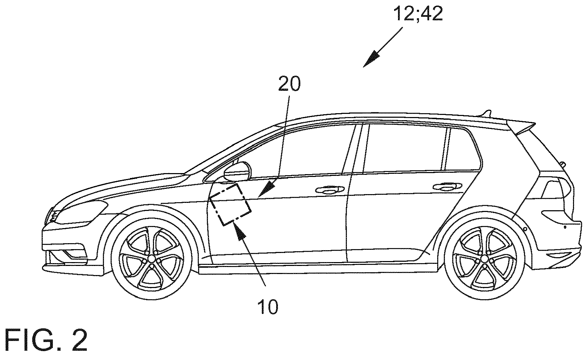

Figur 1 zeigt im oberen Teil ein erfindungsgemäßes Bediensystem 10, das Teil eines hier nicht weiter dargestellten erfindungsgemäßen Fahrzeugs 12 ist (vergleiche Figur 2).

Das Bediensystem 10 umfasst vorliegend drei berührungssensitive Bedienoberflächen14, 16, 18. Mit den Bedienoberflächen 14, 16, 18 sind verschiedene Bedienelemente anzeigbar, hier exemplarisch gezeigt als Bedienelemente 14', 16', 18', über die Funktionen des Fahrzeugs 12 bedienbar sind. Exemplarisch sind die Bedienoberflächen 14, 16, 18 in einer Mittelkonsole 20 des Fahrzeugs 12 integriert.

Die Bedienung erfolgt durch eine Bedieneranwahl beziehungsweise Berührung oder Annäherung eines Bedieners 22, symbolisiert durch eine Hand.

Die Bedienoberflächen 14, 16, 18 sind mit einem Steuergerät 24 wirkverbunden, exemplarisch über ein Bussystem 44. Das Steuergerät 24 steuert zum einen die Anzeige der Bedienelemente 14', 16', 18' auf den Bedienoberflächen 14, 16, 18 und registriert zum anderen die Bedieneranwahl, indem die Bedienoberflächen 14, 16, 18 entsprechende Signale an das Steuergerät 24 senden. Das Steuergerät 24 steuert dann Funktionen, die den Bedienelementen 14', 16', 18' zugeordnet sind.

Es ist ersichtlich, dass die Bedienoberflächen 14, 16, 18 unmittelbar nebeneinander angeordnet sind. Daher kann es ungewollt passieren, dass der Bediener 22, wenn er rein exemplarisch, wie gezeigt, das Bedienelement 14' bedienen will, mit der Hand auch das Bedienelement 16' berührt.

Erfolgt beispielsweise die Berührung des Bedienelements 14' durch den Bediener 22, so erzeugt die Bedienoberfläche 14 ein Anwahlsignal 26. Das Anwahlsignal 26 kann, wenn wie in diesem Beispiel zunächst jeweils ein Bedienelement 14', 16', 18' pro Bedienoberfläche 14, 16, 18 angezeigt wird, für die Anwahl der Bedienoberfläche 14 als solche stehen. Das Steuergerät 24 kann, da jede Bedienoberfläche 14, 16, 18 jeweils nur ein Bedienelement 14', 16', 18' anzeigt, in diesem Fall eindeutig zuordnen, welche Funktion des Fahrzeugs 12 gesteuert werden soll.

Wenn, wie später noch erläutert wird, mehrere Bedienelemente 14', 16', 18' pro Bedienoberfläche 14, 16, 18 angezeigt werden, können in dem Steuergerät 24 Zuordnungen von bestimmten Bereichen auf der jeweiligen Bedienoberfläche 14, 16, 18 hinterlegt sein, aus denen das Anwahlsignal 26 stammt. Da das Steuergerät 24 die Anzeige der Bedienelemente 14', 16', 18' steuert, kann es dann auch zuordnen für die Anwahl, welches konkrete Bedienelement 14', 16', 18' auf der Bedienoberfläche 14, 16, 18 das Anwahlsignal 26 steht.

Das mit der Anwahl korrespondierende Anwahlsignal 26 kann beispielsweise einen hohen Signalpegel 28 aufweisen. Dabei kann es sich um ein Spannungs- oder Stromsignal handeln. Der hohe Signalpegel 28 kann dabei in einem durch den Fachmann zweckmäßig festgelegten Bereich in Volt oder Ampere liegen.

Ohne dass eine Anwahl stattfindet, erzeugen die Bedienoberflächen 14, 16, 18 ein Anwahlsignal 26 mit geringem Signalpegel 30.

Wenn der Signalpegel 26, nun exemplarisch an der Bedienoberfläche 14 erläutert, im Moment der Berührung des Bedienelements 14' auf den hohen Signalpegel 28 ansteigt, wird dies von dem Steuergerät 24 registriert.

In der Folge steuert das Steuergerät 24 die dem Bedienelement 14' zugeordnete Funktion des Fahrzeugs 12 und bewirkt zugleich eine Sperrung 32 der Funktionen, die den anderen Bedienelementen 16', 18' auf den Bedienoberflächen 16, 18 zugeordnet sind.

Während der Sperrung 32 führt selbst eine versehentliche Berührung, wie angedeutet beispielsweise des Bedienelements 16', nicht zu einer Auslösung der zugehörigen Funktion.

Wenn die Berührung des Bedienelements 14' endet, beispielsweise da der Bediener 22 seine Eingabe abgeschlossen hat, wird wieder das Anwahlsignal 26 mit geringem Signalpegel 30 von der Bedienoberfläche 14 erzeugt. Das Steuergerät 24 bewirkt dann eine Freigabe 34 der zuvor gesperrten Funktionen der anderen Bedienelemente 16', 18' auf den Bedienoberflächen 16, 18.

Das Verfahren kann sich analog zu den beschriebenen Schritten fortsetzen. Wird nun in analoger Weise beispielsweise eines der Bedienelemente 16' und 18' durch den Bediener 22 berührt und wird das mit der Anwahl korrespondierende Anwahlsignal 26 mit hohem Signalpegel 28 erzeugt, so werden dann in analoger Weise die Funktionen der anderen Bedienelemente also des Bedienelements 14' und eines der Bedienelemente 16' oder 18', nämlich jenes welches ebenfalls nicht berührt wird, durch das Steuergerät 24 gesperrt.

In Fällen, in denen das Anwahlsignal 26 einen Übergangssignalpegel 36 zwischen dem hohen Signalpegel 28 und dem geringen Signalpegel 30 annimmt, kann durch das Steuergerät 24 beispielsweise geschätzt werden, ob das Anwahlsignal 26 mit dem Vorliegen einer Bedieneranwahl oder dem Ende einer Bedieneranwahl korrespondiert. Das Steuergerät 24 kann sich dann beispielsweise gemäß einem Anwahlsignal 26 mit hohem Signalpegel 28 oder geringem Signalpegel 30 verhalten, abgeleitet aus dem zuletzt bekannten eindeutigen Signalpegel 26.

Das Anwahlsignal 26 kann beispielsweise in Fehlerfällen auch einen Wert annehmen, der oberhalb des hohen Singalpegels 28 liegt und so beispielsweise einen Fehlersignalpegel 38 bilden. Eine Steuerungsfolge 40 kann in einem solchen Fehlerfall beispielsweise für die Funktionen aller Bedienelemente 14', 16', 18' lauten "Sperrung 32". Der Fachmann wird für solche Fehlerfälle geeignete Maßnahmen vorsehen, wie beispielsweise einen Reset des Bediensystems 10. Auch solche Maßnahmen können in dem Steuergerät 24 einfach hinterlegt werden.

Die Pegelbereiche des Anwahlsignals 26 in Bezug auf die jeweiligen in der Tabelle dargestellten Steuerungsfolgen 40 vermag der Fachmann anhand der durch diese Erfindung offenbarten Lehre zweckmäßig auszugestalten.

Wie oben bereits angesprochen, können mehrere Bedienelemente 14', 16', 18' pro Bedienoberfläche 14, 16, 18 angezeigt werden. Dies ist exemplarisch am Bedienelement 14" auf der Bedienoberfläche 14 gezeigt.

In einem solchen Fall enthält das Steuergerät 24 eine Zuordnungen, beispielsweise der Pixelbereiche auf der Bedienoberfläche 14, in denen das jeweilige Bedienelement 14', 14" angezeigt wird. Das Anwahlsignal 26 wird, wenn wie vorliegend beispielhaft gezeigt das Bedienelement 14' angewählt wird, dem Pixelbereich des Bedienelements 14' zugeordnet. In der Folge wird eine Funktion, die dem Pixelbereich des Bedienelements 14" beziehungsweise dem Bedienelement 14" zugeordnet ist, ebenfalls gesperrt. Auch können Funktionen der gesamten Bedienoberfläche 14, bis auf jene des Pixelbereichs des Bedienelements 14' beziehungsweise des Bedienelements 14', gesperrt werden.

Figur 2 zeigt ein erfindungsgemäßes Fahrzeug 12, bei dem es sich vorliegend um ein Kraftfahrzeug 42 handelt.

Das Kraftfahrzeug 42 umfasst ein erfindungsgemäßes Bediensystem 10, wie beispielsweise in Figur 1 beschrieben.

Das Bediensystem 10 ist exemplarisch in einer Mittelkonsole 20 des Kraftfahrzeugs 42 integriert.

### Bezugszeichenliste

- 10: Bediensystem
- 12: Fahrzeug
- 14: Bedienoberfläche
- 14': Bedienelement
- 14": Bedienelement
- 16: Bedienoberfläche
- 16': Bedienelement
- 18: Bedienoberfläche
- 18': Bedienelement
- 20: Mittelkonsole
- 22: Bediener
- 24: Steuergerät
- 26: Anwahlsignal
- 28: hoher Singalpegel
- 30: geringer Signalpegel
- 32: Sperrung
- 34: Freigabe
- 36: Übergangssignalpegel
- 38: Fehlersignalpegel
- 40: Steuerungsfolge
- 42: Kraftfahrzeug
- 44: Bussystem

## Patentansprüche

1. Bediensystem (10) für ein Fahrzeug (12), aufweisend ein Steuergerät (24) und wenigstens zwei unmittelbar nebeneinander angeordnete berührungssensitive Bedienoberflächen (14, 16, 18), wobei das Steuergerät (24) ausgebildet ist, eine Anzeige einer Mehrzahl von Bedienelementen (14', 14", 16', 18') auf den wenigstens zwei Bedienoberflächen (14, 16, 18) zu steuern, eine Bedieneranwahl auf einer der wenigstens zwei Bedienoberflächen (14, 16, 18) im Bereich wenigstens eines angezeigten Bedienelements (14', 14", 16', 18') zu registrieren und dann eine Funktion zu steuern, die dem angewählten Bedienelement (14') zugeordnet ist, wobei das Steuergerät (24) weiterhin ausgebildet ist, für eine Dauer der Bedieneranwahl des angewählten Bedienelements (14') auf einer der wenigstens zwei Bedienoberflächen (14, 16, 18) wenigstens eine Funktion, die wenigstens einem anderen Bedienelement (14", 16', 18') auf einer anderen der wenigstens zwei Bedienoberflächen (14, 16, 18) zugeordnet ist, zu sperren.

2. Bediensystem (10) nach Anspruch 1, **dadurch gekennzeichnet, dass** das Steuergerät (24) ausgebildet ist, im Falle einer Bedieneranwahl des wenigstens einen Bedienelements (14') alle Funktionen, die den anderen Bedienelementen (14", 16', 18') zugeordnet sind, zu sperren.

3. Bediensystem (10) nach einem der vorhergehenden Ansprüche, **dadurch gekennzeichnet, dass** das Steuergerät (24) ausgebildet ist, wenn die Bedieneranwahl des einen Bedienelements (14') endet, die Sperrung der wenigstens einen Funktion, die dem wenigstens einen anderen Bedienelement (14", 16', 18') zugeordnet ist, aufzuheben und dass das Steuergerät (24) weiterhin ausgebildet ist, wenn dann eine Bedieneranwahl eines anderen Bedienelements (14", 16', 18'), dessen Funktion vorher gesperrt war, erfolgt, die Funktion des anderen Bedienelements (14", 16', 18') zu steuern und dass das Steuergerät (24) weiterhin ausgebildet ist, für die Dauer der Bedieneranwahl des anderen Bedienelements (14", 16', 18') wenigstens die Funktion des davor angewählten Bedienelements (14') zu sperren.

4. Verfahren zum Betrieb eines Bediensystems (10) für ein Fahrzeugs (12), wobei betriebene Bediensystem (10) ein Steuergerät (24) und wenigstens zwei unmittelbar nebeneinander angeordnete berührungssensitive Bedienoberflächen (14, 16, 18) umfasst und wobei das Verfahren die folgenden Schritte umfasst:
- Steuerung einer Anzeige einer Mehrzahl von Bedienelementen (14', 14", 16', 18') auf den wenigstens zwei Bedienoberflächen (14, 16, 18) durch das Steuergerät (24);
- Vornahme einer Bedieneranwahl im Bereich eines angezeigten Bedienelements (14') auf einer der wenigstens zwei Bedienoberflächen (14, 16, 18);
- Registrieren der Bedieneranwahl durch das Steuergerät (24);
- Steuern einer Funktion, die dem angewählten Bedienelement (14') zugeordnet ist, durch das Steuergerät (24); und
- Sperren wenigstens einer Funktion, die wenigstens einem anderen Bedienelement (14", 16', 18') auf einer anderen der wenigstens zwei Bedienoberflächen (14, 16, 18) zugeordnet ist, für die Dauer der Bedieneranwahl durch das Steuergerät (24).

5. Verfahren nach Anspruch 4, **dadurch gekennzeichnet, dass** für die Dauer der Bedieneranwahl des einen Bedienelements (14') alle Funktionen, die anderen Bedienelementen (14", 16', 18') zugeordnet sind, durch das Steuergerät (24) gesperrt werden.

6. Verfahren nach Anspruch 4 oder 5, **dadurch gekennzeichnet, dass** die Bedieneranwahl des einen Bedienelements (14') endet und daraufhin die Sperrung der wenigstens einen Funktion, die dem wenigstens einen anderen Bedienelement (14", 16', 18') zugeordnet ist, durch das Steuergerät (24) aufgehoben wird und dann eine Bedieneranwahl eines anderen Bedienelements (14", 16', 18'), dessen Funktion vorher gesperrt war, erfolgt und die Funktion des anderen Bedienelements (14", 16', 18') durch das Steuergerät (24) gesteuert wird und das Steuergerät (24) für die Dauer der Bedieneranwahl des anderen Bedienelements (14", 16', 18') wenigstens die Funktion des davor angewählten Bedienelements (14') sperrt.

7. Steuergerät (24) **dadurch gekennzeichnet, dass** es bei Verwendung in einem Bediensystem nach einem der Ansprüche 1-3 zur Durchführung eines Verfahrens nach einem der Ansprüche 4 bis 6 ausgebildet ist.

8. Fahrzeug (12), **gekennzeichnet durch** ein Bediensystem (10) nach einem der Ansprüche 1 bis 3 und ein Steuergerät nach Anspruch 7.

## Claims

1. Operating system (10) for a vehicle (12), having a control device (24) and at least two touch-sensitive operator interfaces (14, 16, 18) arranged directly beside one another, wherein the control device (24) is designed to control a display of a plurality of operating elements (14', 14", 16', 18') on the at least two operator interfaces (14, 16, 18), to register an operator selection on one of the at least two operator interfaces (14, 16, 18) in the region of at least one displayed operating element (14', 14", 16', 18') and to then control a function assigned to the selected operating element (14'), wherein the control device (24) is also designed, for a duration of the operator selection of the selected operating element (14') on one of the at least two operator interfaces (14, 16, 18), to block at least one function assigned to at least one other operating element (14", 16', 18') on another of the at least two operator interfaces (14, 16, 18).

2. Operating system (10) according to Claim 1, **characterized in that**, in the event of an operator selection of the at least one operating element (14'), the control device (24) is designed to block all functions assigned to the other operating elements (14", 16', 18').

3. Operating system (10) according to one of the preceding claims, **characterized in that**, when the operator selection of the one operating element (14') ends, the control device (24) is designed to cancel the blocking of the at least one function assigned to the at least one other operating element (14", 16', 18'), and **in that**, when an operator selection of another operating element (14", 16', 18') whose function was previously blocked is then made, the control device (24) is also designed to control the function of the other operating element (14", 16', 18'), and **in that** the control device (24) is also designed, for the duration of the operator selection of the other operating element (14", 16', 18'), to block at least the function of the previously selected operating element (14').

4. Method for operating an operating system (10) for a vehicle (12), wherein the operated operating system (10) comprises a control device (24) and at least two touch-sensitive operator interfaces (14, 16, 18) arranged directly beside one another, and wherein the method comprises the following steps of:
- controlling a display of a plurality of operating elements (14', 14", 16', 18') on the at least two operator interfaces (14, 16, 18) by means of the control device (24);
- making an operator selection in the region of a displayed operating element (14') on one of the at least two operator interfaces (14, 16, 18);
- registering the operator selection by means of the control device (24);
- controlling a function assigned to the selected operating element (14') by means of the control device (24); and
- blocking at least one function assigned to at least one other operating element (14", 16', 18') on another of the at least two operator interfaces (14, 16, 18) for the duration of the operator selection by means of the control device (24).

5. Method according to Claim 4, **characterized in that**, for the duration of the operator selection of the one operating element (14'), all functions assigned to other operating elements (14", 16', 18') are blocked by the control device (24).

6. Method according to Claim 4 or 5, **characterized in that** the operator selection of the one operating element (14') ends and the blocking of the at least one function assigned to the at least one other operating element (14", 16', 18') is then cancelled by the control device (24), and an operator selection of another operating element (14", 16', 18') whose function was previously blocked is then made and the function of the other operating element (14", 16', 18') is controlled by the control device (24), and the control device (24) blocks at least the function of the previously selected operating element (14') for the duration of the operator selection of the other operating element (14", 16', 18').

7. Control device (24), **characterized in that**, when used in an operating system according to one of Claims 1-3, it is designed to carry out a method according to one of Claims 4 to 6.

8. Vehicle (12), **characterized by** an operating system (10) according to one of Claims 1 to 3 and a control device according to Claim 7.

## Revendications

1. Système d'utilisation (10) pour un véhicule (12), présentant un appareil de commande (24) et au moins deux interfaces utilisateur tactiles (14, 16, 18) disposées directement les unes à côté des autres, dans lequel l'appareil de commande (24) est réalisé pour commander un affichage d'une pluralité d'éléments d'utilisation (14', 14", 16', 18') sur les au moins deux interfaces utilisateur (14, 16, 18), pour enregistrer une sélection utilisateur sur l'une des au moins deux interfaces utilisateur (14, 16, 18) au niveau d'au moins un élément d'utilisation affiché (14', 14", 16', 18'), et pour commander ensuite une fonction qui est associée à l'élément d'utilisation sélectionné (14'), dans lequel l'appareil de commande (24) est en outre réalisé pour verrouiller pendant une durée de la sélection utilisateur de l'élément d'utilisation sélectionné (14') sur l'une des au moins deux interfaces utilisateur (14, 16, 18) au moins une fonction qui est associée à au moins un autre élément d'utilisation (14", 16', 18') sur une autre des au moins deux interfaces utilisateur (14, 16, 18).

2. Système d'utilisation (10) selon la revendication 1, **caractérisé en ce que** dans le cas d'une sélection utilisateur du au moins un élément d'utilisation (14'), l'appareil de commande (24) est réalisé pour verrouiller toutes les fonctions qui sont associées aux autres éléments d'utilisation (14", 16', 18').

3. Système d'utilisation (10) selon l'une quelconque des revendications précédentes, **caractérisé en ce que** si la sélection utilisateur dudit un élément d'utilisation (14') est terminée, l'appareil de commande (24) est réalisé pour annuler le verrouillage de ladite au moins une fonction qui est associée audit au moins un autre élément d'utilisation (14", 16', 18'), et **en ce que** si ensuite une sélection utilisateur d'un autre élément d'utilisation (14", 16', 18') dont la fonction était verrouillée auparavant est effectuée, l'appareil de commande (24) est en outre réalisé pour commander la fonction de l'autre élément d'utilisation (14", 16', 18'), et **en ce que** l'appareil de commande (24) est en outre réalisé pour verrouiller pendant la durée de la sélection utilisateur de l'autre élément d'utilisation (14", 16', 18') au moins la fonction de l'élément d'utilisation (14') sélectionné précédemment.

4. Procédé d'exploitation d'un système d'utilisation (10) pour un véhicule (12), dans lequel le système d'utilisation (10) exploité comprend un appareil de commande (24) et au moins deux interfaces utilisateur tactiles (14, 16, 18) disposées directement les unes à côté des autres, et dans lequel le procédé comprend les étapes suivantes consistant à :
- commander, par l'appareil de commande (24), un affichage d'une pluralité d'éléments d'utilisation (14', 14", 16', 18') sur les au moins deux interfaces utilisateur (14, 16, 18) ;
- effectuer une sélection utilisateur au niveau d'un élément d'utilisation affiché (14') sur l'une des au moins deux interfaces utilisateur (14, 16, 18) ;
- enregistrer la sélection utilisateur par l'appareil de commande (24) ;
- commander, par l'appareil de commande (24), une fonction qui est associée à l'élément d'utilisation sélectionné (14') ; et
- verrouiller, par l'appareil de commande (24), au moins une fonction qui est associée à au moins un autre élément d'utilisation (14", 16', 18') sur une autre des au moins deux interfaces utilisateur (14, 16, 18) pendant la durée de la sélection utilisateur.

5. Procédé selon la revendication 4, **caractérisé en ce que** pendant la durée de la sélection utilisateur dudit un élément d'utilisation (14'), toutes les fonctions qui sont associées à d'autres éléments d'utilisation (14", 16', 18') sont verrouillées par l'appareil de commande (24).

6. Procédé selon la revendication 4 ou 5, **caractérisé en ce que** la sélection utilisateur dudit un élément d'utilisation (14') se termine, et ensuite le verrouillage de ladite au moins une fonction qui est associée audit au moins un autre élément d'utilisation (14", 16', 18') est annulé par l'appareil de commande (24), et ensuite une sélection utilisateur d'un autre élément d'utilisation (14", 16', 18') dont la fonction était verrouillée auparavant est effectuée, et la fonction de l'autre élément d'utilisation (14", 16', 18') est commandée par l'appareil de commande (24), et l'appareil de commande (24) verrouille pendant la durée de la sélection utilisateur de l'autre élément d'utilisation (14", 16', 18') au moins la fonction de l'élément d'utilisation (14') sélectionné précédemment.

7. Appareil de commande (24) **caractérisé en ce que** s'il est utilisé dans un système d'utilisation selon l'une quelconque des revendications 1 à 3, il est réalisé pour exécuter un procédé selon l'une quelconque des revendications 4 à 6.

8. Véhicule (12), **caractérisé par** un système d'utilisation (10) selon l'une quelconque des revendications 1 à 3 et un appareil de commande selon la revendication 7.
